# EUROPEAN PATENT APPLICATION

(11) **EP 1 394 921 A2**
(43) Date of publication of application: **03.03.2004**
(21) Application number: 03019520.0
(22) Date of filing: 29.08.2003
(51) Int. Cl.: H02J 7/00, B60L 1/00

(54) **Vehicle monitoring system**

(30) Priority: 29.08.2002 US 230699
(71) Applicant: Lester Electrical of Nebraska, Inc., Lincoln, NE 68522 (US)
(72) Inventor: Bauer, mark T., Lincoln, NE 68520 (US); Merchant, David E., Lincoln, NE 68506 (US); Beame, Dennis F., Laguna Hills, CA 92653 (US); Carrier, James L., Lincoln, NE 68502 (US); Stokes, John H., Austin, TX 78758 (US); Krause, Joseph K., Lincoln, NE 68505 (US); Langston, Charles R., Lincoln, NE 68507 (US); Woehrer, Mark K., Wahoo, NE 68066 (US); Schukar, Michael L., Lincoln, NE 68512 (US); Hartz, Richard D., Lincoln, NE 68523 (US)
(74) Representative: UEXKÜLL & STOLBERG

(57) **Abstract**

To manage a fleet of vehicles efficiently, data is obtained concerning vehicle condition; some of this data is recorded in a data packet format (212) on a vehicle and transmitted by radio from the vehicles to a base station, and under some circumstances, transmitted by the internet to a central data station where it is used to determine what should be done with the vehicles, such as for example to determine if the battery of a vehicle must be charged. The data may be transmitted from one vehicle to another vehicle before reaching the base station or the central data station. The data packets can indicate the vehicle to which the data applies, if the battery needs to be charged or replaced and can establish a priority schedule for the charging or replacement of the battery.

## Description

This invention relates to battery-operated vehicles and their components, and more particularly, to battery operated vehicle management systems, to methods of using and maintaining battery-operated vehicles and their components and to methods of using and of recording data concerning the use of battery-operated vehicles and their components such as for example battery chargers and battery charger control systems for battery-operated vehicles.

Vehicle monitoring systems for electrical vehicles are known for monitoring the recharging cycles and energy status of the batteries of vehicles. In one class of such monitoring system, each of a plurality of vehicles stores data concerning the energy status of the batteries. Information stored can be read out of the vehicle in a convenient manner by readout devices such as portable, manually-held, infrared-readout modules that may be taken to the vehicle and used to receive data stored in memory in the vehicle. A central station is provided which is capable of charging vehicles one at a time, with each vehicle monitoring the energy status of its individual battery. Such systems are disclosed in United States Patent 6,114,833 and United States Patent 5,548, 200, the disclosures of which are incorporated herein by reference.

One such prior art storage system within the vehicle is capable of not only maintaining a record of the energy state of the battery but also other information such as the number of recharge occurrences and route information to different destinations that will conserve the most energy. Systems of this type are described in United States Patent 5,487,002, the disclosure of which is incorporated herein by reference.

The prior art monitoring systems of this class have control systems that permit the vehicles each to be charged at the same charging station but the charging stations themselves do not record information and collect data on the vehicles. The vehicles contain the memory which has data in it and that data is read out from them manually and analyzed by those managing a fleet of such vehicles.

The prior art monitoring systems have several disadvantages, such as:
(1) it is costly to collect data using such systems because data is collected manually from a number of vehicles; (2) it is cumbersome and expensive to utilize such systems with large fleets of electric vehicles; (3) such systems do not provide data in a form that can be easily analyzed to reduce unplanned down time, increase utilization and reliability and control operating expenses of the fleet by real time expense tracking.

### SUMMARY OF THE INVENTION

To reduce the above disadvantages, at least one vehicle is managed by obtaining data concerning a condition of the at least one vehicle; recording at least some of the data in a data storage means on the at least one vehicle and formatting the data into a predetermined format. This process is characterized by transmitting the data by radio from the at least one vehicle to a base station and using the data to determine what should be done with the at least one vehicle. Advantageously, the data is used to determine when at least one battery of the at least one vehicle must be charged. Preferably, the base station stores data and transmits it to a central station.

There may be a plurality of vehicles in which case data may be transmitted from one vehicle to another vehicle. The formatted data may include an indication of the vehicle to which the data applies and the temperature of a battery. This data may be used to determine battery condition or battery replacement priorities. The data stored on the vehicle may be transmitted when a central station transmits a signal calling for transmission of the data from the vehicle. At least some of the data stored on the vehicle may be periodically transmitted.

At least one data acquisition system for at least one battery operated vehicle is designed to cooperate with at least one monitoring system for the at least one battery operated vehicle and comprises at least one radio communication circuit, at least one data storage circuit and at least one programmable circuit adapted to be mounted on the at least one vehicle and in communication with the at least one radio communication circuit and one data storage circuit for controlling the at least one radio communication circuit and the at least one data storage circuit wherein data words stored in the at least one data storage circuit containing data related to the operation of the at least one vehicle ) are formatted by said at least one programmable circuit to identify the at least one vehicle and are transmitted by radio.

The at least one programmable circuit includes at least one means for storing data words transmitted to said at least one radio communication circuit in said at least one data storage circuit; said data words including an identification of a vehicle. The at least one programmable circuit includes means for causing said data words including an identification of a vehicle to be transmitted. The data acquisition system includes at least one measuring device that measures characteristics of the at least one vehicle, at least one of the measuring devices being a battery current measuring device. The programmable circuit is a microcontroller. The data words include an identification of the desired destination of the data words. Preferably, the at least one data acquisition system includes at least one means for obtaining data concerning vehicle condition and at least one means for recording at least some of the data in the at least one data storage circuit on the at least one vehicle; the at least one radio communication circuit including means for transmitting the data by radio from at least one of the vehicles to a base station, whereby the data may be used to determine the time for maintenance operation; and means for using the data to determine the time for the maintenance operation.

The at least one data acquisition system includes means for transmitting the data by radio from at least one of the vehicles to a base station, whereby the data may be used to determine the time for maintenance operation; and means for using the data to determine the time for the maintenance operation, the means for using the data to determine the time for the maintenance operation including means for using the data to determine when the battery of a vehicle must be charged. The base station includes means for storing data and transmitting it to a central station and at least one means wherein data may be transmitted from one vehicle to another vehicle with the formatted data including an indication of the at least one vehicle to which the data applies.

The data includes the temperature of a battery and the data is used to determine battery condition and battery replacement priorities. The progammable circuit includes means for transmitting the data stored on the at least one vehicle when a central station transmits a signal calling for transmission of the data from the at least one vehicle or for periodically transmitting at least some of the data stored on the at least one vehicle or to obtain data from a plurality of vehicles in a facility. For this purpose, the base station includes at least one radio transmission circuit; at least one data storage circuit adapted to store data words having a vehicle identification within the data words and information concerning the condition of at least one component of the vehicle. The programmable circuit for controls the data storage circuit and the radio transmission circuit; whereby the base station may obtain data about at least one vehicle for use in managing the vehicles.

The base station has a data storage circuit and a programmable circuit wherein the data storage circuit and programmable circuit are part of a personal computer including a modem whereby several base stations may communicate with a central station for generating reports for managing vehicles in a plurality of facilities each including a base station. The at least one data acquisition system includes means for obtaining data concerning battery condition; a data collecting and transmitting means near the battery, means for recording at least some of the data in a data storage means associated with the data collecting and transmitting means; means for formatting the data into a predetermined format); means for transmitting the data by radio from at least one battery (94) to a base station, whereby the data may be used to determine the time for maintenance operation; and means for using the data to determine the time for the maintenance operation.

The at least one data acquisition system also includes means for obtaining data concerning battery condition; a data collecting and transmitting means near the battery; means for recording at least some of the data in a data storage means associated with the data collecting and transmitting means; means for formatting the data into a predetermined format; means for transmitting the data by radio from at least one battery to a base station whereby the data may be used to determine the time for maintenance operation; and means for using the data to determine the time for the maintenance operation, the means for using the data to determine the time for the maintenance operation including means for using the data to determine when the battery must be charged, means for storing data and transmitting it to a central station and means wherein data may be transmitted from a stationary battery to a vehicle, means wherein data may be transmitted from a stationary battery to another stationary battery, means wherein data may be transmitted from a stationary battery to a vehicle wherein the formatted data includes an indication of the battery to which the data applies and means wherein data may be transmitted from a stationary battery to a vehicle, wherein the data includes temperature of a battery and the data is used to determine battery condition and means for using the data to determine battery replacement priorities, means wherein data may be transmitted from a stationary battery to a vehicle and means for transmitting the data stored in the storage means when a central station transmits a signal calling for transmission of the data from the storage means.

From the above description, it can be understood that, the vehicle monitoring system of this invention has several advantages, such as: (1) it permits management of the vehicle to provide extended battery life and maintenance; (2) it reduces down time; (3) it permits relatively inexpensive and easy management of large fleets; (4) it provides life-cycle data for analysis and trends; (5) it provides abuse and misuse alerts; (6) it permits automatic acquisition of data; and (7) it permits automatic report generation with management data.

### BRIEF DESCRIPTION OF THE DRAWINGS

The above noted and other features of the invention will be better understood from the following detailed description when considered with reference to the accompanying drawings in which:
FIG. 1 is a block diagram of a vehicle monitoring system in accordance with an embodiment of the invention;
FIG. 2 is a block diagram of a base station and communication facilities at a facility for a plurality of vehicles in accordance with an embodiment of the invention;
FIG. 3 is a flow diagram of a software program used in connection with a computer in the base station of FIG. 2 in accordance with an embodiment of the invention;
FIG. 4 is a flow diagram of a program for operating the communication system at a base station of FIG. 2 in accordance with an embodiment of the invention;
FIG. 5 is a block diagram of a vehicle mounted communication and data gathering and recording system in accordance with an embodiment of the invention;
FIG. 6 is a block diagram of a battery temperature sensing and transmission system in accordance with an embodiment of the invention;
FIG. 7 is a flow diagram illustrating the operation of software used in connection with the temperature sensing and transmission system of FIG. 6;
FIG. 8 is a block diagram of a data collection module equipped to be mounted on a vehicle in accordance with an embodiment of the invention;
FIG. 9 is a block diagram of a hard wired system as an alternative for some of the software in the system of FIG. 8;
FIG. 10 is a flow diagram of the operation of the data collection module of FIG. 8 in storing data and transmitting data packets;
FIG. 11 is a flow diagram of the operation of the data collection module of FIG. 8 in responding to a received data packet; and
FIG. 12 is an illustrative depiction of one type of data word used in an embodiment of the invention.

### DETAILED DESCRIPTION

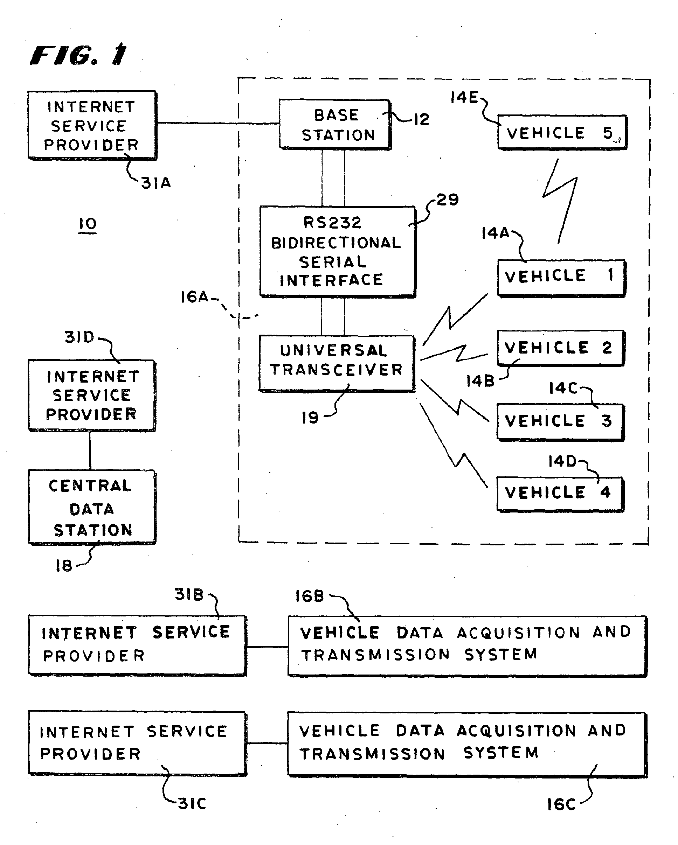

In FIG. 1, there is shown a system 10 for monitoring a plurality of vehicles or fleets of vehicles having a central data station 18 and a plurality of vehicle data acquisition and transmission systems, three of which are shown at 16A-16C for purposes of explanation. The central data station 18 communicates with the vehicle data acquisition and transmission systems 16A-16C by any suitable means of communication, but in the preferred embodiment they communicate through the internet, illustrated in FIG. 1 by showing a wire connection between each of the vehicle data acquisition and transmission systems 16A-16C and a corresponding one of the internet service providers 31A-31C and a wire connection between the central data station 18 and its corresponding internet service provider 31 D. The central data station 18 collects data from the vehicle data acquisition and transmission systems 16A-16C, processes the data for each of the vehicle data and acquisition transmission systems 16A-16C and reports back to management for the specific vehicle acquisition and transmission systems or to a central management with reports about battery age, cycles of use of different vehicles and their batteries, and any other information of use to management in managing a particular location. On the other hand, for some management systems, the reports may be prepared at the vehicle data acquisition and transmission systems base station.

One of the vehicle data acquisition and transmission systems 16A is shown in greater detail than the other two 16B and 16C but each of them may have the components shown in greater detail for 16A. As shown in 16A, each of the vehicle data acquisition and transmission systems 16A-16C may include a base station 12 and a plurality of vehicles, four of which, 14A-14D, are shown in 16A for illustration although the system is designed to accommodate a very large number of vehicles that may travel over considerable distances in locations that cause direct transmission to the central data station 18 to be difficult.

The base station 12 may include a battery charger and may acquire information as to the energy left in each of the batteries of the vehicles that it is monitoring, acquiring such data from the vehicle itself. It may also obtain other information such as distance traveled, locations where the vehicles have been, cycles of battery charging, power consumption, time between maintenance or any other data that management may want to transmit to the central data station 18 for processing.

While the embodiment of FIG. 1 relates to data being collected by base station12 by radio from vehicles and transmitted to a central data station 18 for the preparation of reports and/or interpretation of data, other embodiments include only a single base station 12 that receives data from vehicles for interpretation and/or preparation of reports and may receive the information by radio from a distance or by interrogation either by radio or with direct readout devices instead. Still other embodiments may include several base stations in different locations of a facility which may communicate with each other or with a main base station and each may communicate with an outside central data station or data may be gathered by one the main base stations and transmitted to the central data station.

In the preferred embodiment, the data acquisition and transmission system 16A includes the base station 12, a universal transceiver 19 and a plurality of vehicles 14A-14D. The base station 12 communicates with the universal transceiver 19 through a RS232 bidirectional serial connector 29 and with the central data station 18 through the internet. It communicates with the internet service provider 31A through a conventional telephone line. The vehicles 14A-14D communicate within a short range either with each other or with the universal transceiver 19. The universal transceiver 19 may poll vehicles to obtain transmission of data or may receive all data from any vehicle close enough to be within the reception range of the universal transceiver. In the preferred embodiment, the vehicles transmit data periodically and other vehicles or the universal transceiver 19 receives the data if it is within range.

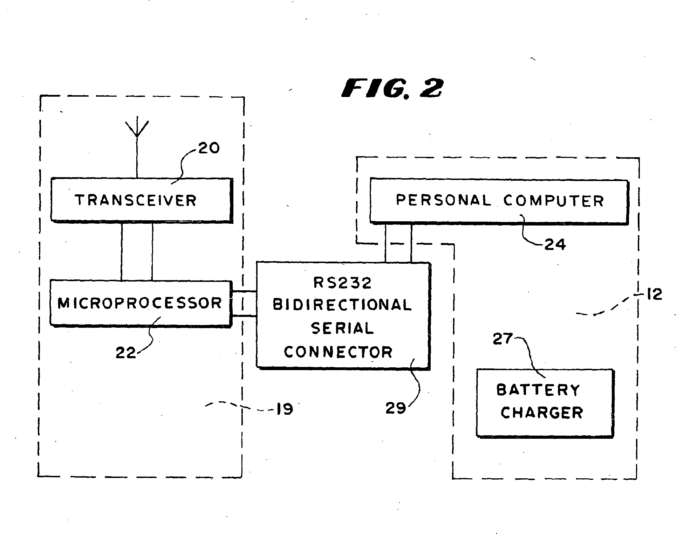

In FIG. 2, there is shown a block diagram of a base station and communication facilities at a facility for a plurality of vehicles usable in the embodiment of FIG. 1. It includes the base station 12, an RS.232 bidirectional serial connector 29 and an universal transceiver 19 shown connected together with the RS232 bidirectional serial connector 29 being connected between the base station 12 and the universal transceiver 19. The base station 12 may include a battery charger 27 for charging the batteries of vehicles at that location and a personal computer 24 for controlling the central station 12 and for controlling the universal transceiver 19.

The universal transceiver 19 includes a microprocessor 22, a transceiver 20 and an antenna. The microprocessor 22 receives signals from the RS232 bidirectional serial connector 29 from the personal computer 24 and supplies information through the bidirectional serial connector 29 to the personal computer 24. While a specific arrangement of computing ability, transmitting ability, and connectors is shown in FIG. 2, there are many alternatives and many different kinds of connectors and communication systems that permit a central station to receive and transmit communications to and from individual vehicles, including data transmissions. Moreover, the battery charging station 27 can be located anywhere and need not be adjacent to the personal computer 24 although it is useful for it to be so. The personal computer 24, as mentioned above, may communicate through the internet with the data central station 18 but other forms of communication may be used as well, or if there is only one installation, all of the data processing may be within the personal computer 24 and it may not be necessary to communicate with any other station.

With the arrangement of FIG. 2, the base station 12 receives information from the universal transceiver 19 from any of a plurality of vehicles, illustrated in FIG. 1 as vehicles 14A-14E, and transmits this information to the microprocessor 22 or the personal computer 24. In one embodiment, the microprocessor 22 also transmits information to a central data station 18 (FIG. 1) through the universal transceiver 19 and may transmit interrogation signals to the vehicles 14A-14E to cause a transmission from memory in the vehicle of data to the transceiver 19. The battery charger 27 may incorporate battery charger control circuitry but in the preferred embodiment, the vehicles 14A-14E (FIG. 1) include the battery control circuitry that connects to the battery charger 27 for charging the battery within the vehicle under the control of the battery charger control circuitry. It is also possible to supply information to the battery controlled circuitry within the vehicles from the microprocessor 22 such as information concerning the characteristics of the particular battery in the vehicle that may affect the charging rate to control the battery charger 27 by the battery charger control circuitry within the vehicle for maximum benefit from the charging and to avoid likelihood of damage, particularly in the finished charging and in cases where the charging condition is determined by the amount of energy that has been provided by the battery within the vehicle and the total amount of energy that the particular battery has according to historic records of that battery.

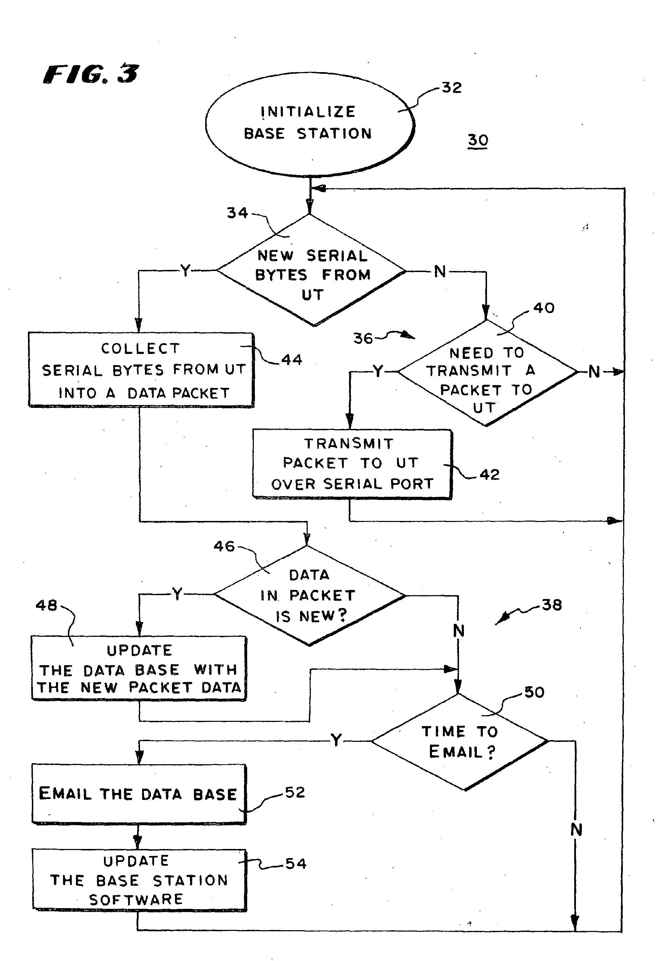

In FIG. 3, there is shown a flow diagram 30 of the operation of a program performed in the computer of the base station 12 having an initializing step 32, a decision step 34 for evaluating whether there are new serial bytes from a universal transmitter such as the universal transmitter 19 (FIGS. 1 and 2), the subroutine 36 of transmitting a packet of data to the universal transmitter 19 and

a subroutine 38 of developing packets of data and transmitting them over the internet to the central data station 18 using internet service providers 31A and 31 B, for example, as shown in FIG. 1. After the programs are initialized in step 32, the program proceeds to decision step 34 and if decision step 34 decides there are new serial bytes from a universal transmitter, the program proceeds to subroutine 38 and if there are not new serial bytes then the program proceeds to subroutine 36.

Subroutine 36 includes the decision step 40 of determining whether to transmit a packet of data to the universal transmitter 19 that is in communication with the base station 12 or not. If this decision step reaches the decision that the packet of data should be transmitted to a universal transmitter such as 19, then it proceeds to step 42 which transmits the packet to the universal transmitter over a serial port and from there returns to step 34 which is again a decision step. If not, then the program proceeds directly from the decision step 40 back to the start of the decision step 34.

If the decision step 34 indicates that there is new serial bytes from the universal transmitter, then the program proceeds to subroutine 38. Subroutine 38 includes the step 44 of collecting serial bytes from the universal transmitter into a data packet, the step 46 of determining if the data in the data packet is new. If it is determined to be new, then the program proceeds to step 48 of updating the data base within the computer at the base station with the new packet data and from there to step 50 of determining if it is time to transmit data packets to the central data station 18 through the internet. If the data in the packets is determined to not be new, then the program proceeds directly to the decision step 50 of determining if it is time to transmit data packets to the central data station 18 through the internet, and if not, returning to step 34. If it is time to transmit a packet to the central data station 18 (FIG. 1), then the program proceeds to e-mail the data base at step 52 in the preferred embodiment and to update the base station software in step 54. While transmitting the data by e-mail is the preferred embodiment, obviously the data may be transmitted or sent to the central station 18 in other ways.

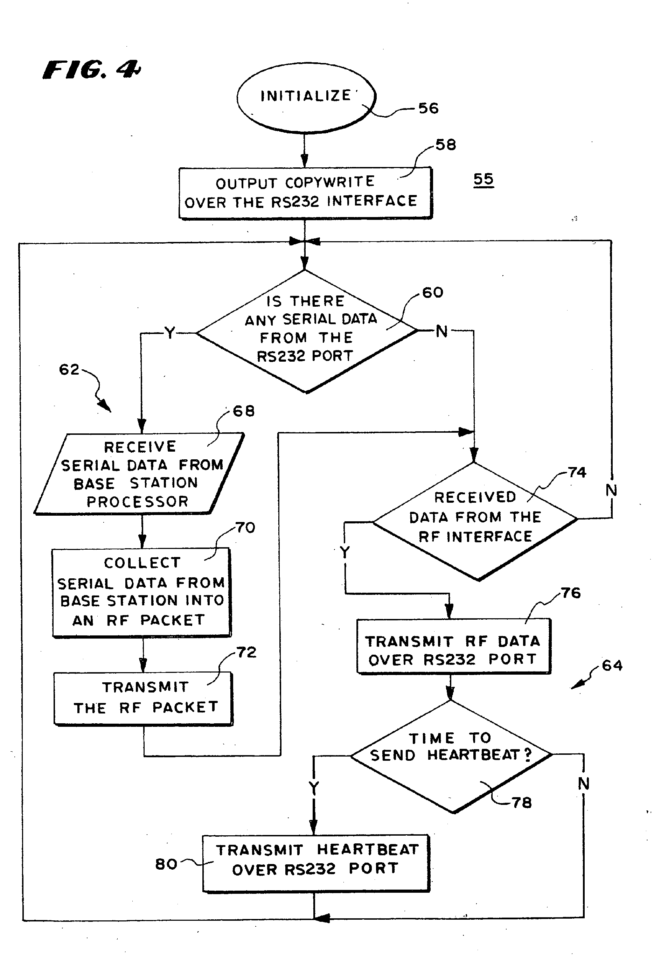

In FIG. 4, there is shown a flow diagram 55 of the operation of the universal transmitter 19 (FIGS. 1 and 2) including the step 56 of initializing the program, the step 58 of providing an output identification signal through the RS232 interface, which may include a copyright notice, the step 60 of deciding if serial data from the RS232 interface is present on a port of the interface, the step 62 of forming a RF (radio frequency) packet of data and the step 64 of transmitting an RF packet. If the decision 60 determines that there is serial data from the RS232 port, then the program proceeds to subroutine 62, and if it determines that there is no serial data at the RS232 port, then the program proceeds to subroutine 64.

The subroutine 62 includes the step 68 of receiving serial data from the base station personal computer, the step 70 of formatting the serial data from the base station into an RF packet and step 72 of transmitting the RF packet to subroutine 64. With this process, data such as data of a characteristic of the battery that might be measured in the vehicle such as its energy state or the like is formed into a standard packet of data in which there are several sections of one or more bytes indicating information.

The subroutine 64 includes the step 74 of receiving data from the RF interface, the step 76 of transmitting the RF data over the RS232 port to the microprocessor 22, the decision step 78 of determining if it is time to send a heartbeat signal indicating data to be transmitted and the step 80 of transmitting the heartbeat signal over the RS232 port to the universal transmitter 19. With

these steps, packets of data proceed to step 74 when present, but if at step 74 data is not received from the RF interface, then the program proceeds back to decision step 60. If data has been received, then the data is transmitted through the RS232 bi-directional serial connector 29 to the microprocessor 22 in the universal transmitter 19. At this time, the universal transmitter determines if it is time to send a heartbeat signal and if not, the program proceeds back to decision step 60. If it is time, then the heartbeat signal is transmitted from the personal computer 24 through the RS232 bi-directional serial connector 29 to the universal transmitter 19 for transmission as indicated by the step 80 and then the program proceeds back to step 60.

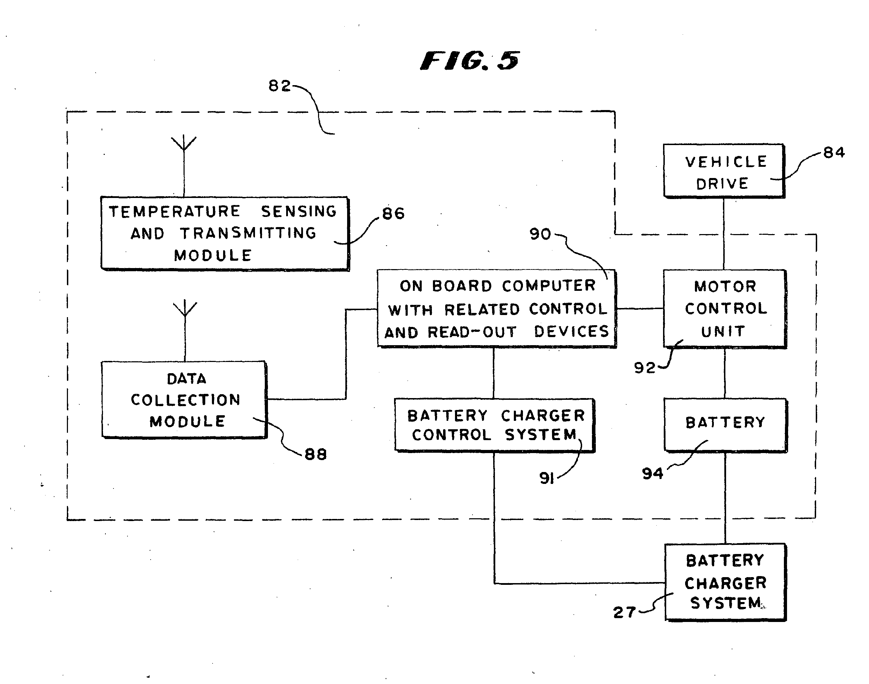

In FIG. 5, there is shown a block diagram of a vehicle control and data collection system 82 having a temperature sensing and transmitting module 86, a data collection module 88, an on-board computer with related control and read-out devices 90, a motor control unit 92, an on-board battery charger control system 91, the battery charger system 27 and a battery 94, with the motor control unit 92 being connected to a vehicle drive system 84 to drive a corresponding one of the vehicles 14A-14D. A suitable on-board computer related control and read-out device system 90 is illustrated in the aforementioned U.S. Patent 6,114,833 assigned to the same entity as this application, the disclosure of which is incorporated herein. Similarly a suitable vehicle drive system and motor control system 84 and 92 are disclosed therein driven by a suitable battery 94. As described in the aforementioned United States Patent 6,114,833, a battery charger control system is mounted on the vehicle and is connected to the battery charger 27 (FIG. 2) to control charger.

As shown in this system, the data collection module 88 includes an antenna and receives signals with data from the on-board computer and related control and read-out devices 90 as well as from RF signals broadcast to it from the other vehicles 14A-14E (FIG. 1) or from the temperature sensing and transmitting module 86. The temperature sensing and transmitting module 86 measures the temperature of the battery and transmits that data to the data collection module 88. The on-board computer with related control and read-out devices 90 measures parameters such as current in and current out of a battery, calculates other values such as energy in and energy out and total energy and supplies this data to the data collection module 88 for transmission to the universal transmitter 19 located with the base station 12 and connected thereto by the RS 232 bi-directional serial connector 29.

In operation, the universal transceiver module 19 (FIG. 1) is electrically in communication with the personal computer 24 (FIG. 2) in the base station 12. The personal computer 24 (FIG. 2) communicates with an internet service through a modem and a standard telephone line. Radio frequency data is received by the universal transceiver 19 from one or a plurality of data collector modules 88 (FIG. 5) attached to the batteries of electric vehicles such as forklifts and lift trucks. Each data collection module transmits its data on a periodic basis and the received data is sent to a data central collection station 18 (FIG. 1) via a modem, the Internet and an E-mail process. The transceiver 20 within the universal transmitter 19 operates at a frequency of 916.500 mhz. Data is transmitted using on/off keying at a data rate of approximately 12 Khz.

In a first mode of operation, the base station/universal transceiver may poll the data collection modules at predetermined periods of time that may extend from a few minutes to seven days or operate in a listen only mode. It then processes and formats all data received, initiates a call to a local internet service provider through the internal modem, and transmits the data in the form of an E-mail to a central collection site. In a second mode of operation, the universal transceiver 19 receives and processes data from data collection modules 88 which periodically transmit their data to one another even in the absence of a poll. Each data collection module 88 has sufficient memory to hold the data buffer from at least one other data collection module. Data may therefore be propagated from one module to the next until it reaches the base station/universal transceiver for processing. At any time, when a data collection module transmits its data, its internal buffer is cleared and the data collection process begins all over again.

Transmissions are thus infrequent and short, such as for example a total of 200 bytes of data is transmitted in the preferred embodiment during an interchange between a data collection module 88 and a universal transmitter 19. Data is transmitted at a rate of approximately 12k bits per second. A typical transaction takes approximately 200 milliseconds to complete. The goal of the system is to take data from each data collection module at least once per battery charge cycle. In a very large system employing 1000 data collection modules, the total "air time" consumed during a 24 hour period would be no more than 5 minutes or .0035 percent.

The universal transmitter 19 consists of a microprocessor 22 and a hybrid radio frequency transceiver 20, connected to the base station 12 by a RS232 serial data interface port. Power is supplied to the unit through a wire in the serial data cable that attaches the universal transmitter to the base station's personal computer 24 (FIG. 2). Microprocessor 22 is operated at a frequency of 8.00mhz. In the preferred embodiment it is an ATMEGA 163-8AC sold by Atmel at 2325 Orchard Parkway, San Jose, CA 95131.

Microprocessor 22 (FIG. 2), which in the preferred embodiment is a National Semiconductor LP 2980AIMS5-5.0 microprocessor, controls the transmit/receive function of RF transceiver 20, which is a model TRIOOO IC manufactured by RF Monolithics, Inc., 4347 Sigma Road, Dallas, Texas 75244-4589, and is of the amplified sequential hybrid variety. This type of transceiver is distinguished from typical TRF or Superhet designs by virtue of the fact that it has no oscillator and thus produces no spurious emissions in the radio frequency range. The nature of this type of receiver is that it bit slices the incoming data and thus has no need for such circuit functions as a local oscillator. Switching of the antenna between the receive and transmit functions is accomplished internally to the transceiver 20. The antenna used in this application is a tuned 1/4 wave permanently attached marine type.

While the data acquisition and transmission system of this invention has been described in terms of a vehicle monitoring system, data can be collected from stationary batteries not mounted on a moving vehicle but used to power other apparatuses. Similarly, the data collected from stationary batteries can be transmitted directly from the data collection module to a universal transceiver at a base station for analysis along with data from other stationary batteries on vehicles or a combination of the two or can be received by a near-by stationary battery data collection module or a near-by data collection module on a vehicle for later transmission. The data relating to stationary batteries can of course be transmitted by several base stations to a central data station.

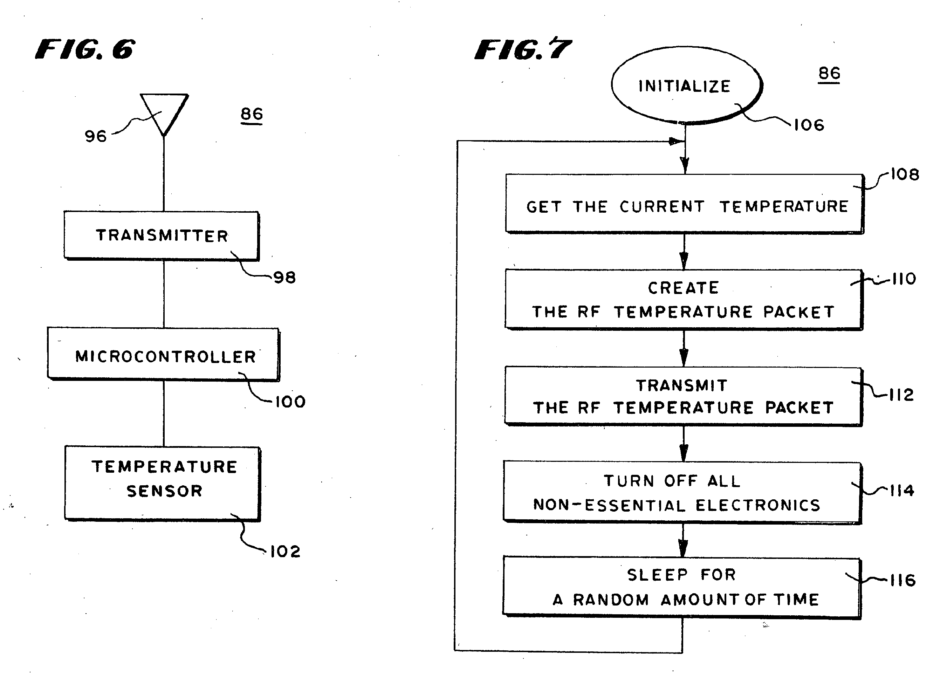

In FIG. 6, there is shown a block diagram of a temperature sensing and transmitting module 86 having an antenna 96, a transmitter 98, a microcontroller 100 and a temperature sensor 102. The temperature sensor 102 is attached to the battery of the vehicle. It senses the temperature of the battery and supplies a digitized signal indicating that value to the microcontroller 100 that controls the transmitter 98 for transmission at a predetermined time. The microcontroller 100 causes the signal to be transmitted through transmitter 98 and antenna 96 as an RF signal to the data collection module 88 (FIG. 5) where it is received and stored for later transmission with other values in a data packet to the universal transceiver 19 (FIGS 1 and 2) for transmission to the storage or to use in the base station 12 (FIG. 2), and periodically in some systems, for transmission to a central data station 18 (FIG. 1). Power is supplied to the module through a 1-ampere hour, 3-volt lithium coin cell. Transmission is one-way and is purposely designed to be short range. The temperature sensing and transmitting module 86 operates at a frequency of 916.500 MHz.

The temperature sensing and transmitting module 86 periodically transmits battery temperature data to nearby data collection modules 88 (FIG. 5). The data collection module 88 closest to the temperature sensing and transmitting module 86 receives the greatest number of successful transmissions. The data collection module 88 stores the battery temperature data along with battery charge and voltage data in an internal data buffer. Periodically, each data collection module transmits its data to other nearby data collection modules or to a universal transceiver 19 at the base station 12. This data is then E-mailed by the universal transmitter 19 at the base station 12 to a central location for processing. Transmissions are thus infrequent and short. A total of less than 20 bytes of data is transmitted during an interchange between the temperature sensing and transmitting module 86 and the data collection module 88. Data is transmitted at a rate of approximately five kilobits per second. A typical transaction takes approximately 250 milliseconds to complete.

The data is transmitted from the temperature sensing and transmitting module 86 in an omnidirectional pattern in the preferred embodiment, but a directional pattern aimed at the antenna of the data collection module 88 on the same vehicle could be used. Its range should be sufficient to be received by the antenna of the data collection module 88 on the same vehicle and should not be so large as to be received by data collection modules on a large number of other vehicles or be received frequently by another vehicle. It should be in the range of 6 inches and 200 feet but in the preferred embodiment is 100 feet. In the preferred embodiment, the signal from the temperature sensing and transmitting module may provide information directly to a base station which can use the data to determine the temperature in the building

The microcontroller 100 is a MSP430F1121PW chip manufactured and sold by Texas Instruments. It is connected to a 32,768 hz watch type crystal. This frequency is used to control a PLL circuit internal to the microcontroller 100 which sets its operating frequency of 2 MHz. The microcontroller also controls the operation of the digital temperature sensor 102, which is a LM77CIM-3 chip sold by National Semiconductor Corporation. The temperature sensor 102 is normally powered down until a temperature reading is taken. Once the temperature data is read, the temperature sensor 102 is turned off. The microprocessor 100 is connected to receive signals from the digital temperature sensor 102 and in response to activate the transmitter 98, which is a TX6000 chip manufactured by Texas Instruments Incorporated, 12500 TI Blvd., Dallas, Texas 75243-4136. The serial data is then sent to the transmitter 98 which operates at a frequency of 916.500 MHz. The antenna on the personal computer board consists of a personal computer board trace approximately one-quarter (1/4) wavelength in size. Once assembled, the entire device is potted in a urethane compound.

In FIG. 7, there is shown a flow diagram illustrating the operation of the temperature sensing and transmitting module 86 including the step 106 of initializing the program, the step 108 of obtaining the current temperature, the step 110 of creating the RF temperature packet, the step 112 of transmitting the RF temperature packet, the step 114 of turning off all non-essential electronics and the step 116 of causing the microprocessor program to go into the sleep mode for a random amount of time as timed within the module. After that time, the program proceeds from the step 116 back to the step 108 of obtaining anothertemperature reading. The temperature sensing and transmitting module 86 transmits frequently when the microcontroller 100 is first started but after a period of time of between 6 hours and 48 hours transmits much less frequently in the range of between 5 minutes and fifteen minutes to conserve the power of the battery of the microcontroller 100. In the preferred embodiment, the temperature sensing and transmitting module 86 transmits data every 4 second for the first 24 hour period after the microprocessor is turned on and then transmits at intervals that vary between 8 minutes, thirty two seconds and twelve minutes forty eight seconds.

The data packets that are formed and transmitted are of two different formats in the preferred embodiment although any number of different formats may be formulated in accordance with the design of the circuits herein. In the preferred embodiment, one format is that for the temperature sensing and transmitting module 86. The battery temperature is measured and the resulting signal is digitized and transmitted in the temperature sensing and transmitting module 86 to an adjacent data collection module where it may be added to other data in a standard packet format and transmitted on to the universal transmitter 19 coupled to the base station 12.

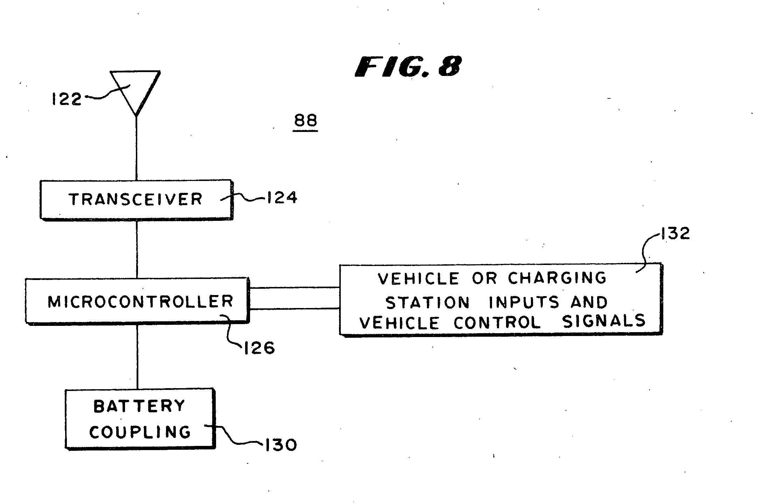

In FIG. 8, there is shown a block diagram of the data collection module 88 having a transceiver 124, a microcontroller 126 and a battery coupling 130. The transceiver 124 communicates with an antenna 122 to transmit data to or receive signals from the universal transceiver 19 (FIG. 1) or to receive data from the temperature sensing and transmitting module 86 (FIG. 5) or to transmit data to or receive data from other data collection modules in other vehicles. The microcontroller 126 controls the transceiver 124 in each of these processes.

Firstly, the microcontroller 126 receives data from the battery coupling 130 which is a Hall effect current sensor. This data includes, for example, current into and from the battery of the vehicle. The microcontroller 126 may calculate energy into and energy from the battery from this data for transmission to the base station 12 (FIG. 2) through the universal transceiver 19 (FIGS. 1 and 2) directly if it is sufficiently close or through another vehicle as an intermediate step. The base station 12 may use this information to determine the need for a battery charge or to set priorities between vehicles in the facility for charging and transmit signals back to the vehicle indicating that it should proceed to the battery charger. In the alternative, the microcontroller 126 may determine the condition of the battery and signal the operator when it is time to proceed to the battery charger as disclosed in the aforesaid United States Patent 6,114,833.

Secondly, the microcontroller 126 may itself perform the computer operations disclosed in United States Patent 6,114,833 and may in addition calculate the number of cycles of battery charging and vehicle operations performed, may record data concerning maintenance of the vehicle and transmit this information to the universal transmitter 19 for use at the base station 12 or for transmission to the central data station 18.

Thirdly, the transceiver 124 receives temperature information from the temperature sensing and transmitting module 86 and transmits it to the microcontroller 126 which uses this data to determine the condition of the battery. This information is formatted into an information packet for transmission to the base station 12 (FIG. 2) and may be used to determine replacement and/or special charging conditions It may also be transmitted to the central data station 18 (FIG. 1).

Fourthly, the transceiver 124 may transmit data periodically under the control of the microcontroller 126 and this data may be received by other data collection modules on other vehicles. The other data collection modules may transmit this data to the central station by the other vehicles. The central station 18 will maintain the most current data related to the same vehicle. The transmission pattern of the data collection modules is preferably omnidirectional and generally has a range sufficient to reach other vehicles and to reach the base station when it is near the base station. It should be at least 20 feet and in the preferred embodiment is 150 feet.

Fifthly, the transceiver 124 may receive data from other vehicles and transmit this data to the base station 12 (FIG. 2) under the control of the microcontroller 126 which may in turn transmit it to the data central station 18 (FIG. 1). Moreover, the microcontroller 126 may receive data directly during charging from the base station and may receive data by coupling to the on-board computer circuits or other measuring devices on the vehicle as well as data entered manually by the vehicle operator. Similarly, other values such as the voltage values or cell density values from a probe can be converted and transmitted to the microcontroller 126, which can translate density values into voltage values. Similarly values measured and stored on circuit boards within the vehicle can be supplied through inputs 132 to the microcontroller 126, which may be values indicating the number of cycles or the distance the vehicle has moved or the number of recharge cycles or maintenance records or the like.

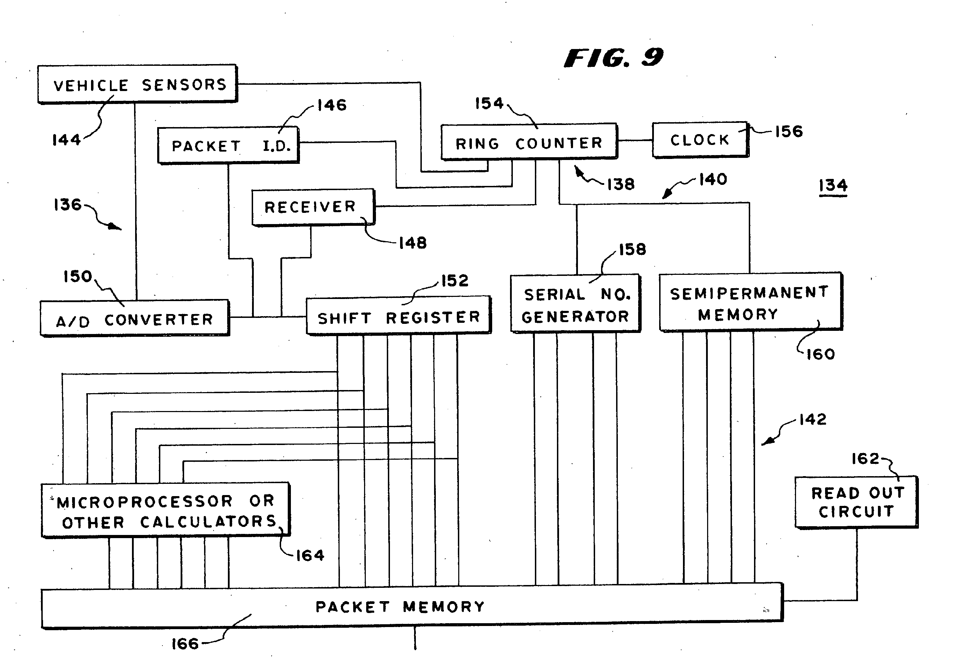

While in the preferred embodiment, the data measurements, processing and communication is done in microcontrollers and microprocessors under the control of programs as described above and hereinafter, it is clear that the invention could be done with hardware but generally at a higher cost. For example, in FIG. 9, there is shown a block diagram 134 of a circuit which could be entirely or at least partly implemented by known types of hardware to perform the functions performed by software and microcontrollers in the preferred embodiment.

The generally hardware circuit 134 has as its principal parts a data gathering system 136, a sequencer 138, a permanent data section 140 and a data packet forming circuit 142. The data gathering system 136 and permanent data section 140 supply data to the data packet forming circuit 142 under the control of the sequencing circuit 138. To supply data to the data packet forming circuit 142, the data gathering system 136 includes a plurality of vehicle sensors 144, a packet identification section 146, a receiver 148 for receiving information transmitted by radio, an analog-to-digital converter 150 and a shift register 152. In this data gathering system 136, the plurality of vehicle sensors 144 such as a Hall effect current measuring circuit and/or temperature measuring circuits such as thermocouples have an output connected to the input of the analog-to-digital converter 150. The packet ID section 146 includes a keyboard and/or firmware or microcontroller memory for supplying a packet identification for the data to be entered. The radio receiver 148 receives information transmitted to it for use in the data packet. The vehicle sensors 144, the packet ID section 146 and the radio receiver 148 are all electrically connected to the ring sequencing circuit 138 which sequences them in order into the packet data forming circuit 142 along with data from the permanent data section 140, with analog data from the vehicle sensors 144 being converted to digital form by the A/D converter 150.

The sequencing circuit 138 includes a ring counter 154 and a clock 156 which steps the ring counter from position to position, opening gates to provide information in sequence from the vehicle sensors 144, the packet ID section 146 and the receiver 148 to the shift register 152 for stepping into position at the parallel outputs of the shift register 152. The permanent data section 140 includes data such as a serial number generator 158 that is specific to the vehicle with which the circuit 138 is associated and a semi-permanent memory 160 stores data that may be keyboarded into it such as the destination of the packet of information.

The outputs of the shift register 152, the serial number generator 158 and the semi-permanent memory 160 are all connected to the data packet memory 166 for storage in parallel form. Calculations may be performed on the variable data from the shift register 152 in a microprocessor or other processing hardware 164 and that may also be applied to the data packet of memory 166. For example, this may be a calculation of power from measurements of current into or out of the battery and of the voltage. This data may be serially read from the data packet memory 166 by a read-out circuit 162.

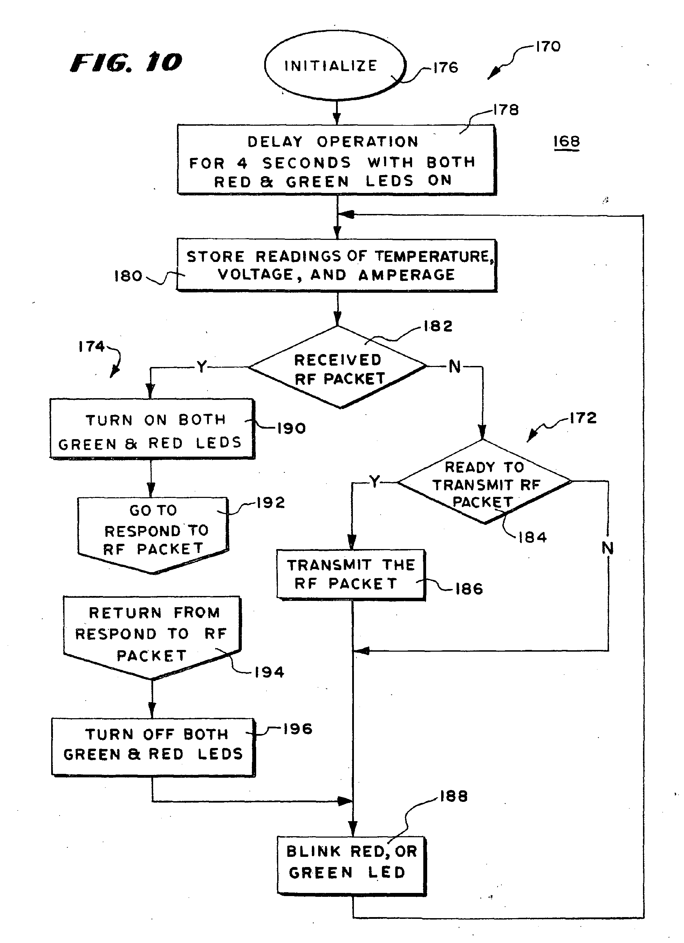

In FIG. 10, there is shown a flow diagram 168 of the program that operates the data collection module in the preferred embodiment having an initializing section 170, a radio frequency transmitting section 172 and a data packet response section 174. The initializing software section 170 includes in the stated sequence, the step 176 of initializing the microprocessor, the step 178 of delaying the operation of the microprocessor for four seconds and illuminating both red and green light emitting diodes, the step 180 of storing readings of temperature, voltage and amperage and the decision step 182 of determining if a radio frequency packet has been received. If a radio frequency packet has not been received, the decision step 182 proceeds to the transmission section 172.

The transmission section 172 includes the decision step 184 of determining if the RF packets are ready to transmit, the step 186 of transmitting the RF packet, and the step 188 of blinking red or green light emitting diodes. If the decision step 184 indicates that it is not ready to transmit an RF packet, then the program proceeds to the step 188 of blinking the red or green light emitting diodes and then proceeds back to the beginning of the step 180 of storing readings of temperature, voltage and amperage. If the decision step 184 indicates that the microprocessor is ready to transmit a radio frequency data packet then the program proceeds to transmit the radio frequency data packet at step 186 and from there to the step 188 of blinking the red or green light emitting diodes and back to the step 180 of storing the readings of temperature, voltage and amperage.

If the decision step 182 indicates that a radio frequency packet has been received, then the program proceeds to the sub routine 174 of responding to a radio frequency data packet. The sub routine 174 includes the step 190 of turning on both red and green light emitting diodes and going to the sub routine of responding to the radio frequency data packet at step 192. After the sub routine 192 is performed, the program returns from that sub routine at step 194 and turns off both the green and red light emitting diodes at step 196, at which time the program proceeds to blinking red or green light emitting diodes at step 188 and returning to the step 180 of storing readings of temperature, voltage and amperage.

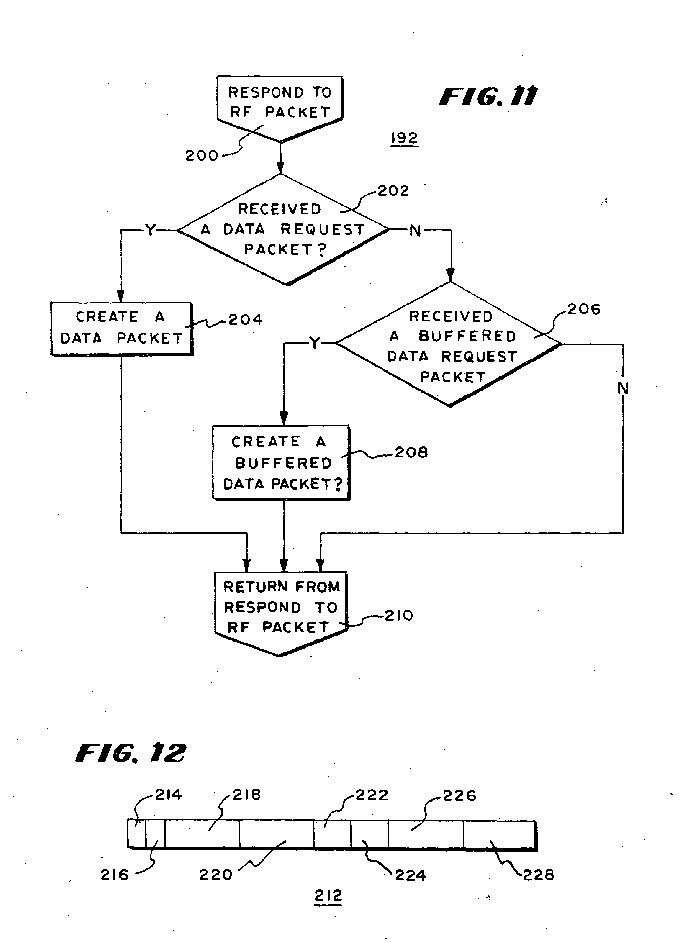

In FIG. 11, there is shown the subroutine 192 of responding to the radio frequency data packet in the data collection module. The subroutine 192 includes the step 200 of responding to the radio frequency data packet, the decision step 202 of determining if it has received a data request packet, the decision step 206 of determining if it has received a buffered data request packet, (buffered data packets are packets received by a data collection module from a transmitter rather than collecting it from sensors or the like and than transmitted on or relayed) the step 208 of creating a buffer data packet, the step of creating a data packet 204 and the step of returning from the response to the radio frequency packet 210. The subroutine 192 of responding to the radio frequency data packet at 200, proceeds to the decision step 202 of determining rather a data request packet has been received. If it has not, the program proceeds to the step 206 of determining rather it has received a buffered data request packet. If it has not, the program goes to the step 210 which is to return to the program 168 (FIG. 10). If the decision step 206 determines that it has received a buffered data request packet, it proceeds to the step 208 of creating a buffered data packet and from there it returns at step 210 to the program 168 (FIG. 10). If the decision step 202 determines that is has received a data request packet, it proceeds to the step 204 of creating a data packet and from there to the step 210 of returning to the program 168 (FIG 10).

In the preferred embodiment, there are two significant data packets that are formed on the vehicles and transmitted from the vehicles. One format is that of the data collection module 88 (FIG. 5) and the other is that of the temperature sensing and transmitting module 86 (FIG. 5). The data from the temperature sensing packet is transmitted by the temperature sensing and transmitting module 86 and is received at least by the data collection module 88 of the same vehicle and included in the data packet of the data collection module that is transmitted to other vehicles and to the base station 12 (FIG. 2).

In FIG. 12, there is shown a data packet 212 for which is formatted as a temperature sensing data packet as an example of the data packet formation. In this data packet 212, there are eight sections to each data word, with a single byte section 214 indicating the type of the data packet, which in this case is a temperature sensing data packet, a second one-byte section 216 that gives a version of the data word, with the versions numbered in sequential order, the next section 218 is a four-byte section indicating the source of the packet such as the serial number of the vehicle, the next section 220 is a four-byte section indicating the destination of the packet such as to the data collection module of the same vehicle, the next section 222 is the temperature reading last obtained, the next section 224 is the last digitally controlled oscillator tap settings, the next section 226 is a four-byte section indicating the number of seconds since the temperature sensing unit was turned on and the last section 228 indicates the CRC-32 checksum used as a error checking code for the data word. Thus 22 bytes of information are in the temperature sensing and transmitting module 86 packet that is transmitted a short distance to at least the data collection module on the same vehicle. It may be received by other near-by vehicles but because of the frequency of transmission, only the data collection module on the same vehicle is likely to retain it so that it is the one transmitted to the base station 12 (FIG. 2).

The data collection data packet includes 32 sections and eighty five bytes, which are: (1) a one-byte section indicating the type of packet; (2) a one-byte section indicating the packet version; (3) a four-byte section indicating the source of the packet; (4) a four-byte section indicating the destination of the packet; (5) a four-byte section indicating the data collection module that last recorded the data; (6) a four-byte section indicating the data collection modules time in Unix format; (7) a four-byte section indicating the total amp hours of discharge from the battery; (8) a four-byte section indicating the total discharge time in seconds; (9) a four-byte section indicating the total charge received by the battery in ampere hours; (10) a four-byte section indicating the total discharge time in seconds; (11) a four-byte section indicating the time when the last charge started; (12) a two-byte section indicating the minimum voltage during the last charge cycle; (13) a two-byte section indicating the maximum voltage during the last charge cycle; (14) a two-byte section indicating the accumulated temperature when the charge cycle is started; (15) a two-byte section indicating the accumulated temperature of the battery at the end of a charge; (16) a two-byte section indicating the accumulated temperature of the battery at the beginning of discharge; (17) a two-byte section indicating the total number of charge-discharge cycles; (18) a one-byte section indicating the number of times the data collection module has been reset; (19) the digitally controlled oscillator tap settings of the temperature sensing unit; (20) a four-byte section indicating the number of times the temperature sensing unit has been heard from; (21) a two-byte section indicating the last voltage reading; (22) a two-byte section indicating the last amperage reading; (23) a two-byte section indicating the last data collection module interval temperature reading; (24) a two-byte section indicating the latest temperature sensing unit reading; (25) a four-byte section indicating the temperature sensing unit identification unit; (26) a four-byte section indicating the time when the data collection module locked onto the temperature sensing unit; (27) a two-byte section indicating the time the last temperature sensing unit packet was received from the locked temperature sensing unit; (28) a one-byte section indicating the number of hops from the base to the data collection module for the hot list; (29) a one-byte section indicating the number of document collection modules that the data packet was received by; (30) a two-byte section indicating the total number of times the locked temperature sensing unit has been heard from; (31) a two-byte section indicating the total number of times a nonlocked temperature sensing unit has been heard from; and (32) a four-byte section indicating the CRC-32 checksum.

Although in the preferred embodiment, data words are formatted on the vehicles to include identification information of the vehicles and the destination, they may in known manners be generated in the transmission of the data and formatted by the receiving station. Moreover, while some advantages are obtained by using data packets, each item of information could be transferred individually or in other packets and the packets, when used can be formatted in different ways and into different numbers of formats.

Although a preferred embodiment of the invention has been disclosed with some particularity, many variations and modifications in the preferred embodiment may be made with out deviating from the invention. Accordingly, it is to be understood that, within the scope of the appended claims, the invention may be practiced other than as specifically described.

## Claims

1. A method of managing at least one vehicle (14A), comprising the steps of obtaining data concerning a condition of the at least one vehicle (14A); recording at least some of the data in a data storage means (126, 166) on the at least one vehicle (14A) and formatting the data into a predetermined format (212); **characterized by** transmitting the data by radio (124) from the at least one vehicle (14A) to a base station (12); and using the data to determine what should be done with the at least one vehicle (14A).

2. The method of claim 1 in which the step of using the data to determine what should be done with the at least one vehicle includes using the data to determine when at least one battery (94) of the at least one vehicle (14A) must be charged.

3. The method of claim 1 in which the base station (12) stores data and transmits it to a central station (18).

4. The method of any of claims 1-3 in which there are a plurality of vehicles and data is transmitted from one vehicle (14A) to another vehicle (14A).

5. The method of any of claims 1-3 wherein the formatted data includes an indication of the vehicle (14A) to which the data applies.

6. The method of any of claims 1-3 in which the data includes temperature of a battery (94) and the data is used to determine battery condition.

7. The method of any of claims 1-3 in which the data is used to determine battery replacement priorities.

8. The method of any of claims 1-3 in which the data stored on the vehicle (14A) is transmitted when a central station (18) transmits a signal calling for transmission of the data from the vehicle (14A).

9. The method of any of claims 1-3 in which at least some of the data stored on the vehicle (14A) is periodically transmitted.

10. At least one data acquisition system for at least one battery operated vehicle (14A) designed to cooperate with at least one monitoring system (FIG. 1) for the at least one battery operated vehicle (14A), comprising:
at least one radio communication circuit (124) adapted to be mounted on the at least one vehicle (14A);
at least one data storage circuit adapted to be mounted on the at least one vehicle (14A) in electrical communication with the at least one radio communication circuit (124); and
at least one programmable circuit (90) adapted to be mounted on the at least one vehicle (14A) and in communication with the at least one radio communication circuit (124) and the at least one data storage circuit for controlling the at least one radio communication circuit (124) and the at least one data storage circuit wherein data words stored in the at least one data storage circuit containing data related to the operation of the at least one vehicle (14A) are formatted by said at least one programmable circuit (90) to identify the at least one vehicle (14A) and are transmitted by radio.

11. The at least one data acquisition system of claim 10 wherein said at least one programmable circuit (90) includes at least one means for storing data words transmitted to said at least one radio communication circuit (124) in said at least one data storage circuit; said data words including an identification of a vehicle (14A).

12. The at least one data acquisition system of claim 10 wherein said at least one programmable circuit (90) includes means for causing said data words including an identification of a vehicle (14A) to be transmitted.

13. The at least one data acquisition system of any of claims 10-12 further comprising at least one measuring device that measures characteristics of the at least one vehicle (14A).

14. The at least one data acquisition system of any of claims 10-12 in which the at least one measuring device is at least one battery current measuring device.

15. The at least one data acquisition system of any of claims 10-12 in which the programmable circuit (90)is a microcontroller.

16. The at least one data acquisition system of any of claims 10-12 in which the data words include an identification of the desired destination of the data words.

17. The at least one data acquisition system of any of claims 10-12 including at least one means for obtaining data concerning vehicle condition and at least one means for recording at least some of the data in the at least one data storage circuit on the at least one vehicle (14A); the at least one radio communication circuit (124) including means for transmitting the data by radio from at least one of the vehicles to a base station (12), whereby the data may be used to determine the time for maintenance operation; and means for using the data to determine the time for the maintenance operation.

18. The at least one data acquisition system of any of claims 10-12 including means for transmitting the data by radio from at least one of the vehicles to a base station (12), whereby the data may be used to determine the time for maintenance operation; and means for using the data to determine the time for the maintenance operation, the means for using the data to determine the time for the maintenance operation including means for using the data to determine when the battery (94) of a vehicle (14A) must be charged.

19. The at least one data acquisition system (16A) of any of claims 10-12 further including a base station (12), wherein the base station (12) includes means for storing data and transmitting it to a central station (18).

20. The at least one data acquisition system (16A) of any of claims 10-12 in which the at least one vehicle (14A) includes at least one means wherein data may be transmitted from one vehicle (14A) to another vehicle (14A).

21. The at least one data acquisition system (16A) of any of claims 10-12 wherein the formatted data includes an indication of the at least one vehicle (14A) to which the data applies.

22. The at least one data acquisition system (16A) of any of claims 10-12 in which the data includes temperature of a battery (94) and the data is used to determine battery condition.

23. The at least one data acquisition system (16A)of any of claims 10-12 further including means for using the data to determine battery replacement priorities.

24. The at least one data acquisition system (16A) of any of claims 10-12 wherein the progammable circuit includes means for transmitting the data stored on the at least one vehicle (14A) when a central station (18) transmits a signal calling for transmission of the data from the at least one vehicle (14A).

25. The at least one data acquisition system (16A) of any of claims 10-12 further including means for periodically transmitting at least some of the data stored on the at least one vehicle (14A).

26. The at least one data acquisition system (16A)of any of claims 10-12 further including a base station (12) wherein the base station (12) is adapted to obtain data from a plurality of vehicles in a facility, said base station (12) comprising:
at least one radio transmission circuit;
at least one data storage circuit adapted to store data words having a vehicle identification within the data words and information concerning the condition of at least one component of the vehicle (14A); and
at least one programmable circuit (90) for controlling the data storage circuit and the radio transmission circuit; whereby the base station (12) may obtain data about at least one vehicle (14A) for use in managing the vehicles.

27. The at least one data acquisition system (16A)in accordance with any of claims 10-12 further including a base station (12) having a data storage circuit and a programmable circuit (90) wherein the data storage circuit and programmable circuit (90) are part of a personal computer.

28. The at least one data acquisition system (16A)in accordance with any of claims 10-12 further including a base station (12) having a data storage circuit and a programmable circuit (90) wherein the data storage circuit and programmable circuit (90) are part of a personal computer, the personal computer including a modem whereby several base stations may communicate with a central station (18) for generating reports for managing vehicles in a plurality of facilities each including a base station (12).

29. The at least one data acquisition system (16A)in accordance with any of claims 10-12, comprising:
means for obtaining data concerning battery condition;
a data collecting and transmitting means near the battery (94);
means for recording at least some of the data in a data storage means (126, 166) associated with the data collecting and transmitting means;
means for formatting the data into a predetermined format (212);
means for transmitting the data by radio from at least one battery (94) to a base station (12), whereby the data may be used to determine the time for maintenance operation; and
means for using the data to determine the time for the maintenance operation.

30. The at least one data acquisition system (16A) of any of claims 10-12 further including:
means for obtaining data concerning battery condition;
a data collecting and transmitting means near the battery (94);
means for recording at least some of the data in a data storage means (126, 166) associated with the data collecting and transmitting means;
means for formatting the data into a predetermined format (212);
means for transmitting the data by radio from at least one battery (94) to a base station (12), whereby the data may be used to determine the time for maintenance operation; and
means for using the data to determine the time for the maintenance operation, said means for using the data to determine the time for the maintenance operation including means for using the data to determine when the battery (94) must be charged.

31. The at least one data acquisition system (16A)in accordance with any of claims 10-12 further including:
at least one base station (12);
means for obtaining data concerning battery condition;
a data collecting and transmitting means near the battery (94);
means for recording at least some of the data in a data storage means (126, 166) associated with the data collecting and transmitting means;
means for formatting the data into a predetermined format (212);
means for transmitting the data by radio from at least one battery (94) to at least one base station (12), whereby the data may be used to determine the time for maintenance operation; and
means for using the data to determine the time for the maintenance operation.

32. The at least one data acquisition system (16A) of any of claims 10-12 further including:
at least one base station (12);
means for obtaining data concerning battery condition;
a data collecting and transmitting means near the battery (94);
means for recording at least some of the data in a data storage means (126, 166) associated with the data collecting and transmitting means;
means for formatting the data into a predetermined format (212);
means for transmitting the data by radio from at least one battery (94) to the at least one base station (12), whereby the data may be used to determine the time for maintenance operation; and
means for using the data to determine the time for the maintenance operation.

33. The at least one data acquisition system (16A) of any of claims 10-12 further including:
at least one base station (12);
means for obtaining data concerning battery condition;
a data collecting and transmitting means near the battery (94);
means for recording at least some of the data in a data storage means (126, 166) associated with the data collecting and transmitting means;
means for formatting the data into a predetermined format (212);
means for transmitting the data by radio from at least one battery (94) to the at least one base station (12), whereby the data may be used to determine the time for maintenance operation; and
means for using the data to determine the time for the maintenance operation.

34. The at least one data acquisition system (16A)of any of claims 10-12 further including:
at least one base station (12);
means for obtaining data concerning battery condition;
a data collecting and transmitting means near the battery;
means for recording at least some of the data in a data storage means (126, 166) associated with the data collecting and transmitting means;
means for formatting the data into a predetermined format (212);
means for transmitting the data by radio from at least one battery to the at least one base station (12), whereby the data may be used to determine the time for maintenance operation; and
means for using the data to determine the time for the maintenance operation.

35. The at least one data acquisition system (16A)of any of claims 10-12 further including:
at least one base station (12);
means for obtaining data concerning battery condition;
a data collecting and transmitting means near the battery (94);
means for recording at least some of the data in a data storage means (126, 166) associated with the data collecting and transmitting means;
means formatting the data into a predetermined format (212);
means for transmitting the data by radio from at least one battery (94) to the at least one base station (12), whereby the data may be used to determine the time for maintenance operation; and
means for using the data to determine the time for the maintenance operation.

36. The at least one data acquisition system (16A) of any of claims 10-12 further including:
at least one base station (12);
means for obtaining data concerning battery condition;
a data collecting and transmitting means near the battery (94);
means for recording at least some of the data in a data storage means (126, 166) associated with the data collecting and transmitting means;
means for formatting the data into a predetermined format (212);
means for transmitting the data by radio from at least one battery (94) to the at least one base station (12), whereby the data may be used to determine the time for maintenance operation;
means for using the data to determine the time for the maintenance operation;
means wherein data may be transmitted from a stationary battery to a vehicle (14A); and
means for using the data to determine battery replacement priorities.

37. The at least one data acquisition system (16A)of any of claims 10-12 further including:
at least one base station (12);
means for obtaining data concerning battery condition;
a data collecting and transmitting means near the battery (94);
means for recording at least some of the data in a data storage means (126, 166) associated with the data collecting and transmitting means;
means for formatting the data into a predetermined format (212);
means for transmitting the data by radio from at least one battery (94) to the at least one base station (12), whereby the data may be used to determine the time for maintenance operation;
means for using the data to determine the time for the maintenance operation;
means wherein data may be transmitted from a stationary battery to a vehicle (14A); and
means for transmitting the data stored in the storage means (126, 166) is transmitted when a central station (18) transmits a signal calling for transmission of the data from the storage means (126, 166).
